# EUROPEAN PATENT SPECIFICATION

(11) **EP 4 670 315 B1**
(45) Date of publication and mention of the grant of the patent: **25.11.2026**
(21) Application number: 23710971.5
(22) Date of filing: 07.03.2023
(51) Int. Cl.: H04L 9/00

(54) **CRYPTOGRAPHICALLY CONFIGURABLE DATA ENTITIES AND ENCRYPTION CONTROLLING ENTITY TO SUPPORT IN-NETWORK COMPUTING**
KRYPTOGRAPHISCH KONFIGURIERBARE DATENEINHEITEN UND VERSCHLÜSSELUNGSSTEUERUNGSEINHEIT ZUR UNTERSTÜTZUNG VON NETZWERKINTERNER DATENVERARBEITUNG
ENTITÉS DE DONNÉES CONFIGURABLES DE MANIÈRE CRYPTOGRAPHIQUE ET ENTITÉ DE COMMANDE DE CHIFFREMENT POUR PRENDRE EN CHARGE UN CALCUL EN RÉSEAU

(43) Date of publication of application: 31.12.2025
(73) Proprietor: Huawei Technologies Co., Ltd., Shenzhen, Guangdong 518129 (CN)
(72) Inventor: TRIVISONNO, Riccardo, 80992 Munich (DE); SCHWARZMANN, Susanna, 80992 Munich (DE)
(74) Representative: Gill Jennings & Every LLP
(86) International application number: PCT/EP2023/055704
(87) International publication number: WO 2024/183887

(56) References cited:
- STOICA RAZVAN-ANDREI ET AL: "Secret Computing over Multiple Access Channels", 2022 56TH ASILOMAR CONFERENCE ON SIGNALS, SYSTEMS, AND COMPUTERS, IEEE, 31 October 2022 (2022-10-31), pages 559 - 563, XP034303922, DOI: 10.1109/IEEECONF56349.2022.10051874
- SHI YUANMING ET AL: "Communication-Efficient Edge AI: Algorithms and Systems", IEEE COMMUNICATIONS SURVEYS & TUTORIALS, IEEE, USA, vol. 22, no. 4, 7 July 2020 (2020-07-07), pages 2167 - 2191, XP011821399, DOI: 10.1109/COMST.2020.3007787

## Description

### TECHNICAL FIELD

The present disclosure relates to the field of encrypted data processing in communication networks, in particular communication networks according to 5G and 6G standardization and beyond. In particular, the disclosure relates to method and apparatus for enabling In-network computing on homomorphic encrypted traffic.

### BACKGROUND

In-network Computing (INC) is a currently emerging concept and will potentially play a key role for 6G. It allows to process the network packets (thus modifying their payload data) while they are traversing the network nodes. In 5G/6G terms, this means that the UP (user plane) entities (e.g., UPF, User Plane Function, and/or AN, Access Node), can carry out computations on a flow's packets besides forwarding them and guaranteeing their QoS requirements.

However, INC cannot be leveraged anymore as soon as traffic is encrypted, as the encryption hinders to access the packets' payload information, which is crucial for computing on them.

Razvan-Andrei Stoica et al, "Secret Computing over Multiple Access Channels", 2022, 56th Asilomar Conference on Signals, Systems, and Computers, IEEE, pages 559-563, XP034303922, discloses a secure computational system for wireless networks using the superposition property of the multiple access channel (MAC) for wireless over-the-air computing (OTAC).

Yuanming Shi et al, "Communication-Efficient Edge AI: Algorithms and Systems", IEEE COMMUNICATIONS SURVEYS & TUTORIALS, VOL. 22, NO. 4, FOURTH QUARTER 2020, pages 2167-2191, XP011821399, discusses key communication challenges in edge AI systems, and discloses communication-efficient techniques, from algorithmic and system perspectives for training and inference tasks at the network edge.

### SUMMARY

This disclosure provides a solution on how to allow In-network Computing (INC) in communication networks such as 5G and 6G networks and beyond, despite traffic encryption.

The foregoing and other objects are achieved by the features of the independent claims. Further implementation forms are apparent from the dependent claims, the description and the figures.

The general idea is to allow computing on encrypted data in the UP, by means of leveraging encryption, in particular Homomorphic Encryption. This requires programming all involved entities, i.e., aligning them in terms of the encryption scheme, in particular HE scheme to use and the respective parameter setting.

In the following, Homomorphic Encryption is described as one example of an encryption scheme. Of course, other encryption schemes, potentially lattice-based, which allow to compute on encrypted traffic, can be used, as well.

The above aligning of involved entities in terms of the encryption scheme leads to the following key points:
The 6G UP being programmed to support Encryption, in particular Homomorphic Encryption (HE) for In-Network Computing.

The 6G UP entities receiving the encryption HE configuration parameters (HE scheme and parameter set) and being programmed to transform and execute HE-conform computations on encrypted packets of a flow according to the specified configuration parameters.

The 6G UE receiving the HE configuration parameters (HE scheme and parameter set) and being programmed for data encoding, encryption and/or decryption using HE according to the specified configuration parameters.

A controlling entity (HE Controlling Entity), determining appropriate, application-aware HE configuration parameters and programming the involved 6G UP entities accordingly, so to allow aligned HE operations.

In order to describe the disclosure in detail, the following terms, abbreviations and notations will be used:
- AN: Access Node
- AF: Application Function
- DN: Data Network
- HE: Homomorphic Encryption
- INC: In-Network Computing
- IUP: Intelligent User Plan
- MS: Micro Service
- MS-ID: Micro Service ID
- MEC: Mobile Edge Computing
- MNO: Mobile Network Operator
- NF: Network Function
- pk: Public key
- sk: Secret key
- SBI: Service Based Interface
- UE: User Equipment
- UP: User Plane
- UPF: User Plane Function

HE: Acronym for Homomorphic Encryption, an encryption technique allowing to carry out computation on the encrypted data without the need to decrypt it.

HE traffic: Network traffic that is encrypted using HE.

HE Processor: Entity which is carrying out computations on HE traffic.

HE Encrypter: Entity, which is encrypting its data using HE, i.e., a source producing and encrypting data x. Please note: this entity can simultaneously be the HE Decrypter.

HE Decrypter: Entity, which is decrypting HE-encrypted data. This entity can simultaneously be the HE Encrypter.

HE-conform microservice: A microservice, which is prepared such that it can be used on HE encrypted data.

HE Compiler: Entity, which is compiling conventional microservices (programs) to HE-conform microservices (programs).

HE Controlling Entity: An entity, possibly composed of multiple logical entities, which is programming all other involved entities, so to align the HE usage among them.

UP path: The AN and the UP functions involved in connecting the UE to the DN.

Com²P-Flow: Acronym for Communication and Compute Flow. A network flow on which computations can be carried out (besides offering communication connectivity).

HE-enabled Com²P-Flow: Com²P-Flow using HE to allow computing on the flows' encrypted traffic.

IUP: Intelligent User Plane, denotes the UP of a mobile network which provides computation capabilities in addition to communication capabilities.

HE-enabled IUP: Advancement of the IUP in the sense that it supports HE, allowing to compute on encrypted traffic.

f: A conventional function / microservice. Denotes a microservice, which describes the computations to carry out on un-encrypted traffic in the UP.

f*: An HE-conform function / microservice. It represents transformation of f in such a way that it is compliant with the used HE scheme and specified parameter set. Typically, HE-conform functions are boolean or arithmetic circuit-based computations.

Plaintext: Unencrypted data.

Ciphertext: Encrypted data (in this disclosure only referring to encryption using HE).

According to a first aspect, the disclosure relates to a user plane entity for processing data traffic in a communication network, the user plane entity comprising: a control interface for receiving encryption configuration parameters over the communication network, the encryption configuration parameters configuring the user plane entity to: encrypt the data traffic according to the encryption configuration parameters to provide first encrypted data traffic; convert a first microservice to a second microservice based on the encryption configuration parameters, the first microservice comprising rules for carrying out computations on the data traffic, the second microservice comprising rules for carrying out computations on the first encrypted data traffic; transform the first encrypted data traffic to second encrypted data traffic by applying the second microservice to the first encrypted data traffic; and decrypt the second encrypted data traffic according to the encryption configuration parameters to provide decrypted data traffic such that the decrypted data traffic corresponds to the non-encrypted data traffic transformed by the first microservice.

Such a cryptographically configurable data entity provides the advantage that they can be used for communication and compute flows. Application-specific tasks can be offloaded to these data entities despite encryption.

Such a cryptographically configurable data entity allows the usage of INC despite traffic encryption. There is no need to trust the computing party (e.g., the MNO).

The user plane entity is configured to: receive the first encrypted data traffic from a UE according to the second aspect or from an application server or from another user plane entity; transform the first encrypted data traffic to the second encrypted data traffic by applying the second microservice to the first encrypted data traffic; and transmit the second encrypted data traffic to the UE or to the application server or to another user plane entity.

Such a user plane entity provides the advantage that it can carry out application-specific computations on encrypted traffic by untrusted third party/UP entities. It allows dynamic setting of the parameter as per an application's specific needs and ensures the necessary alignment between UE and UP for encryption (e.g., HE) usage.

The user plane entity comprises: an encryption processor configured to transform the first encrypted data traffic to the second encrypted data traffic by applying the second microservice to the first encrypted data traffic. This provides the advantage that the user plane entity can process encrypted data traffic.

The user plane entity comprises: an encryption compiler being configured to convert the first microservice to the second microservice, wherein the encryption compiler is integrated into the encryption processor. This provides the advantage that the user plane entity can convert between different microservices for processing differently encrypted or unencrypted data traffic.

In an exemplary implementation of the cryptographically configurable data entity, the encryption configuration parameters configuring the user plane entity to: transform the first encrypted data to an intermediate encrypted data traffic by applying the second microservice to the first encrypted data traffic; and transform the intermediate encrypted data traffic to the second encrypted data traffic or to another intermediate encrypted data traffic by applying the second microservice to the intermediate encrypted data traffic.

This provides the advantage that the encrypted data can be flexible transmitted over the communication network, either to an intermediate node or to the target node.

In an exemplary implementation of the cryptographically configurable data entity, the encryption configuration parameters comprise an encryption scheme, specifying characteristics of the encryption and decryption, and an encryption scheme-specific parameter set which is a specific parameter set for the encryption scheme.

This provides the advantage that the encryption configuration parameters provide all necessary information to the respective data entities for transmitting the encrypted data over the network.

In an exemplary implementation of the cryptographically configurable data entity, the encryption scheme is configured to support Homomorphic Encryption.

This provides the advantage of using - with Homomorphic Encryption - an advanced and well-established encryption scheme which allows processing of encrypted data.

In an exemplary implementation of the cryptographically configurable data entity, the encryption scheme-specific parameter set comprises at least one or a combination of the following: a plaintext modulus, a polynomial modulus, and a ciphertext modulus.

This provides the advantage that the specific requirements of the applications can be fulfilled when supporting these parameters.

In an exemplary implementation of the cryptographically configurable data entity, the cryptographically configurable data entity is configured to act as at least one of the following entities: an encryption entity, configured to encrypt the data traffic providing the first encrypted data traffic; an encryption compiler, configured to convert the first microservice to the second microservice; an encryption processor, configured to transform the first encrypted data traffic to the second encrypted data traffic by applying the second microservice to the first encrypted data traffic; and a decryption entity, configured to decrypt the second encrypted data traffic providing the decrypted data traffic.

This provides the advantage that the data entity is flexible to act as one or a combination of the above entities, i.e., encryption and/or decryption entity, compiler and/or processor.

### BRIEF DESCRIPTION OF THE DRAWINGS

Further embodiments of the disclosure will be described with respect to the following figures, in which:
Figure 1 shows a schematic diagram illustrating a communication network 100 with an encryption controlling entity 110 and a cryptographically configurable data entity 120 according to the disclosure;
Figure 2 shows a schematic diagram illustrating a Communication and Compute Flow (Com²P-Flow) in a communication network 200;
Figure 3 shows a schematic diagram illustrating a User Plane Function Entity 300 with physical/virtual and logical enhancements to support INC;
Figure 4 shows a schematic diagram illustrating Homomorphic Encryption 400;
Figure 5a shows an exemplary network scenario 500a where the application server is located in the data network outside the mobile network domain;
Figure 5b shows an exemplary network scenario 500b where the application server is located within the mobile network domain (e.g. MEC server);
Figure 6 shows a communication network 100 with a HE controlling entity 110, a HE Encrypter, a HE processor, a HE compiler and a HE decrypter according to the disclosure;
Figure 7 shows a communication network 100 with a HE controlling entity 110 and a specific realization of a HE Encrypter, a HE processor, a HE compiler and a HE decrypter according to an embodiment;
Figure 8 shows an exemplary network scenario 800 with a HE controlling entity 110 and a specific realization of a HE Encrypter, a HE processor, a HE compiler and a HE decrypter according to an embodiment;
Figure 9 shows an exemplary network scenario 900 with a HE controlling entity 110 and a 6G UE 710 as HE Encrypter and HE Decrypter according to an embodiment;
Figure 10 shows an exemplary network scenario 1000 with a HE controlling entity 110 and a 6G UE 710 as HE Encrypter and an application server 232 as HE Decrypter according to an embodiment;
Figure 11 shows an exemplary network scenario 1100 with a HE controlling entity 110 and a 6G UE 710 as HE Decrypter and an application server 232 as HE Encrypter according to an embodiment;
Figure 12 shows an exemplary network scenario 1200 with a HE controlling entity 110 and a HE Compiler 604 integrated into the 6G UP entity 722/HE processor 603 according to an embodiment;
Figure 13 shows an exemplary network scenario 1300 with a HE controlling entity 110 and a HE Compiler 604 integrated into HE processor 603 (realized by the UPF 805) according to an embodiment;
Figure 14 shows an exemplary message chart of NF interactions for HE-enabled Com²P-Flow setup with the UPF 805 being the HE Compiler according to an embodiment;
Figure 15 shows a communication network 100 with a HE controlling entity 110 and a specific realization of a HE Compiler 604 as a dedicated NF in the control plane according to an embodiment;
Figure 16 shows a schematic diagram of a communication network 1600 with a new NF (HECRF) 801 dedicated for compiling and storing HE-conform microservices connected to the SBI according to the disclosure;
Figure 17 shows an exemplary message chart of NF interactions for HE-enabled Com²P-Flow setup with a new dedicated NF 801 being the HE compiler 604 according to a first option, where the compilation is initiated by the SMF 804; and
Figure 18 shows an exemplary message chart of NF interactions for HE-enabled Com²P-Flow setup with a new dedicated NF 801 being the HE compiler 604 according to a second option, where the compilation is initiated by the UPF 805.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

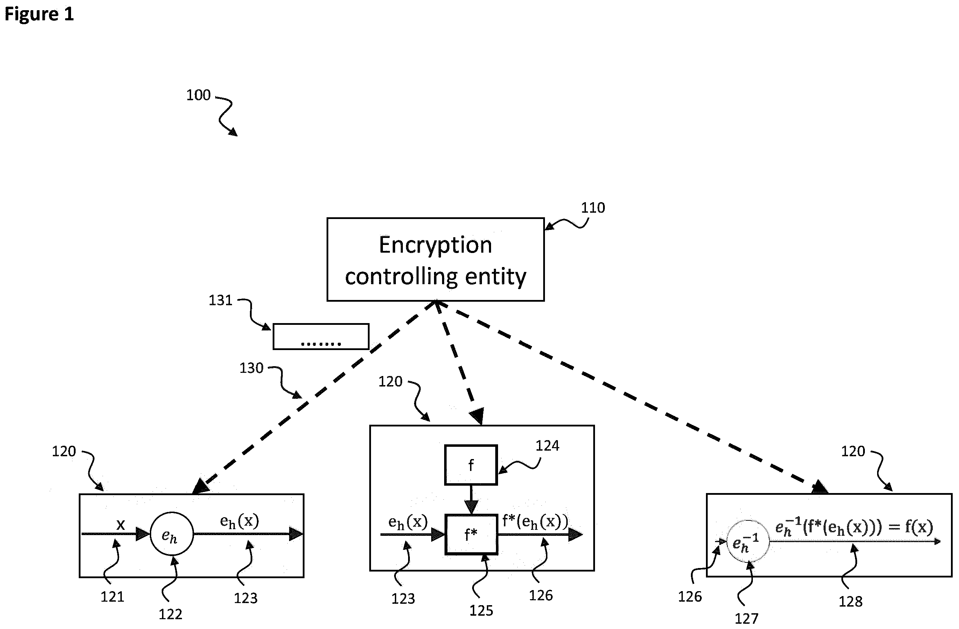

Figure 1 shows a schematic diagram illustrating a communication network 100 with an encryption controlling entity 110 and a cryptographically configurable data entity 120 according to the disclosure. The cryptographically configurable data entity 120 can be a single entity or multiple entities can be configured as such a cryptographically configurable data entity 120 as described hereinafter.

The cryptographically configurable data entity 120 can be used for processing data traffic 121 in a communication network 100. The cryptographically controllable data entity 120 comprises: a control interface 130 for receiving encryption configuration parameters 131 over the communication network 100.

The encryption configuration parameters 131 are configuring the cryptographically controllable data entity (120) to:
- encrypt 122 the data traffic 121 according to the encryption configuration parameters 131 to provide first encrypted data traffic 123;
- convert a first microservice 124 to a second microservice 125 based on the encryption configuration parameters 131, the first microservice 124 comprising rules for carrying out computations on the data traffic 121, the second microservice 125 comprising rules for carrying out computations on the first encrypted data traffic 123;
- transform the first encrypted data traffic 123 to second encrypted data traffic 126 by applying the second microservice 125 to the first encrypted data traffic 123; and
- decrypt 127 the second encrypted data traffic 126 according to the encryption configuration parameters 131 to provide decrypted data traffic 128 such that the decrypted data traffic 128 corresponds to the non-encrypted data traffic 121 transformed by the first microservice 124.

The encryption configuration parameters 131 may configure the cryptographically controllable data entity 120 to: transform the first encrypted data 123 to an intermediate encrypted data traffic by applying the second microservice 125 to the first encrypted data traffic 123; and transform the intermediate encrypted data traffic to the second encrypted data traffic 126 or to another intermediate encrypted data traffic by applying the second microservice 125 to the intermediate encrypted data traffic.

The two or more microservices 124, 125 can be the same or they can be different.

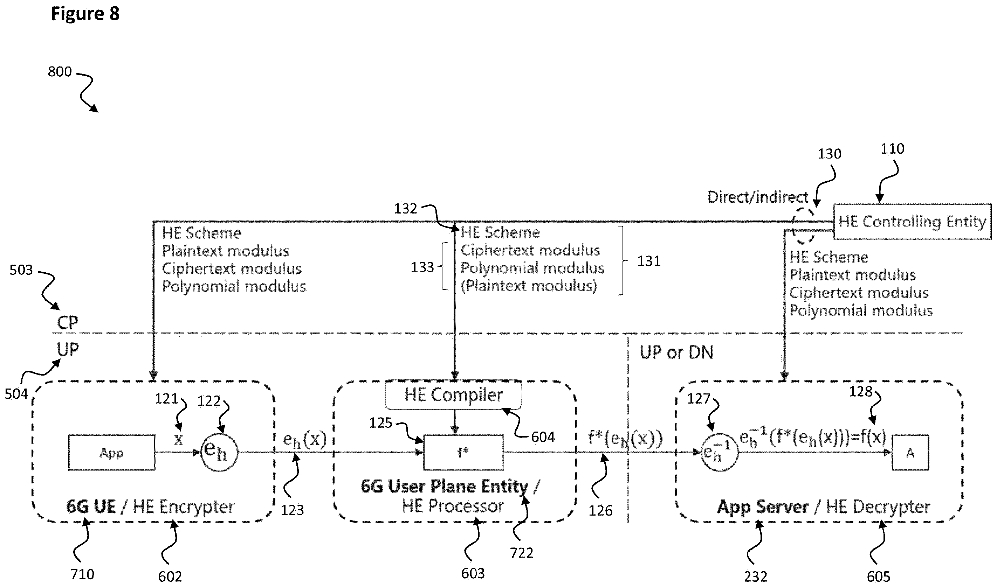

The encryption configuration parameters 131 may comprise an encryption scheme 132, e.g., as illustrated in Figures 8 to 11, for example, specifying characteristics of the encryption and decryption, and an encryption scheme-specific parameter set 133, e.g. as illustrated in Figures 8 to 11, for example which is a specific parameter set for the encryption scheme 132.

The encryption scheme 132 may be configured to support Homomorphic Encryption.

In the following description, embodiments are based on Homomorphic Encryption. However, it understands that any other suitable encryption scheme can be used as well.

The encryption scheme-specific parameter set 133 may comprise at least one or a combination of the following: a plaintext modulus, a polynomial modulus, and a ciphertext modulus, e.g., as shown in Figures 8 to 11, for example.

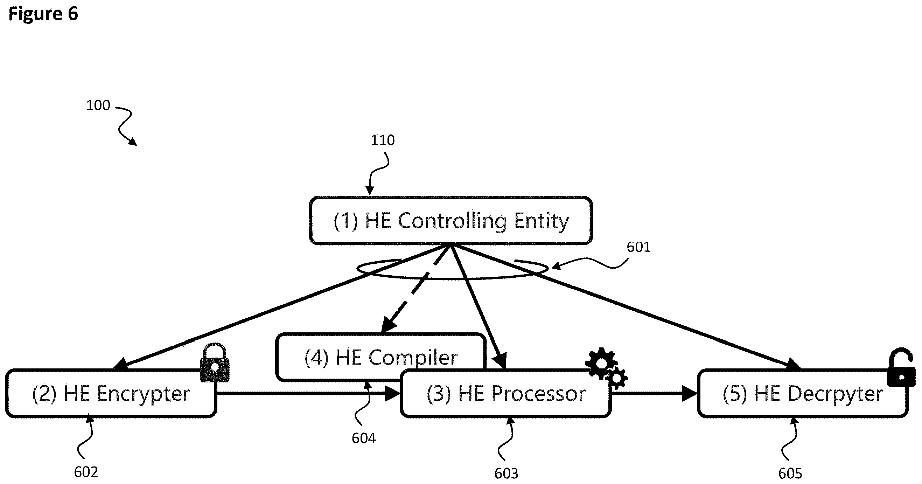

The cryptographically configurable data entity 120 may be configured to act as at least one of the following entities: an encryption entity 602, e.g., as shown in Figure 6, configured to encrypt the data traffic 121 providing the first encrypted data traffic 123; an encryption compiler 604, e.g., as shown in Figure 6, configured to convert the first microservice 124 to the second microservice 125; an encryption processor 603, e.g., as shown in Figure 6, configured to transform the first encrypted data traffic 123 to the second encrypted data traffic 126 by applying the second microservice 125 to the first encrypted data traffic 123; and a decryption entity 605, e.g., as shown in Figure 6, configured to decrypt 127 the second encrypted data traffic 126 providing the decrypted data traffic 128.

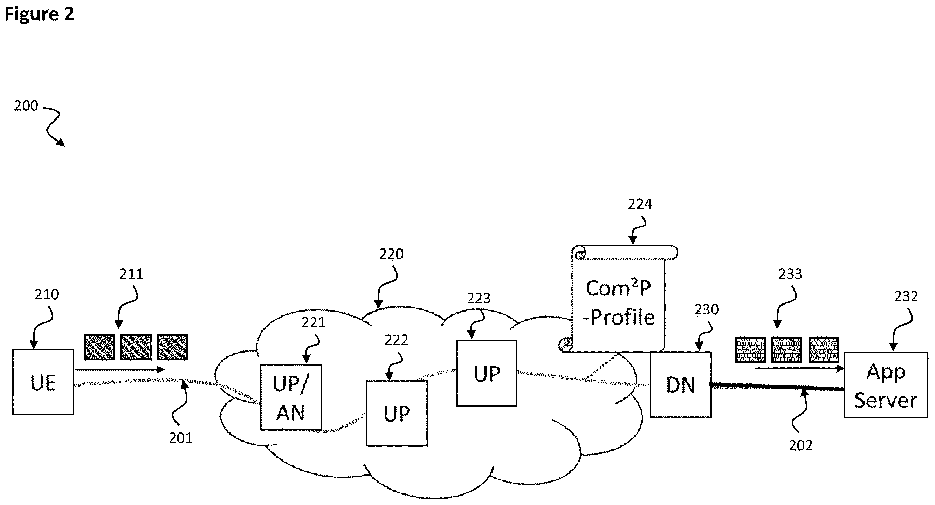

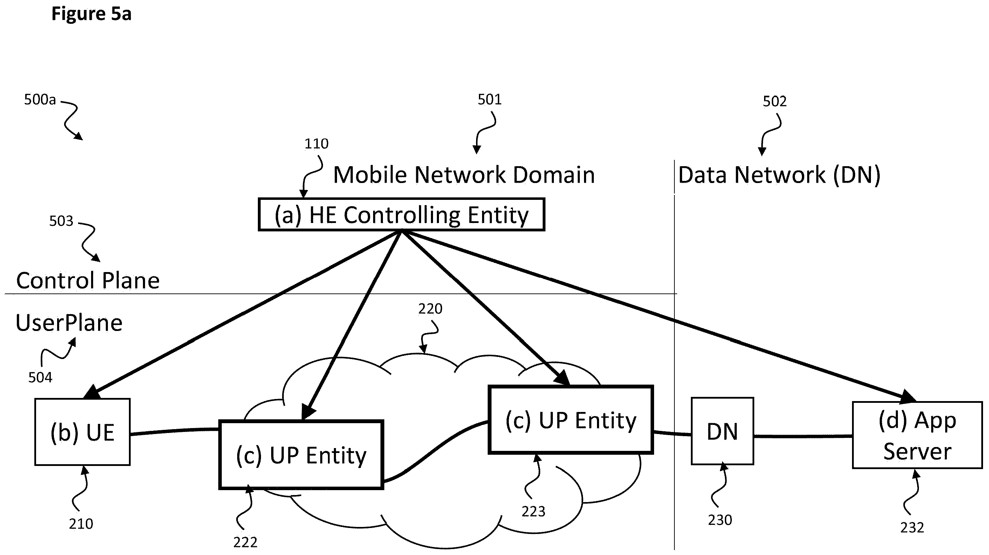

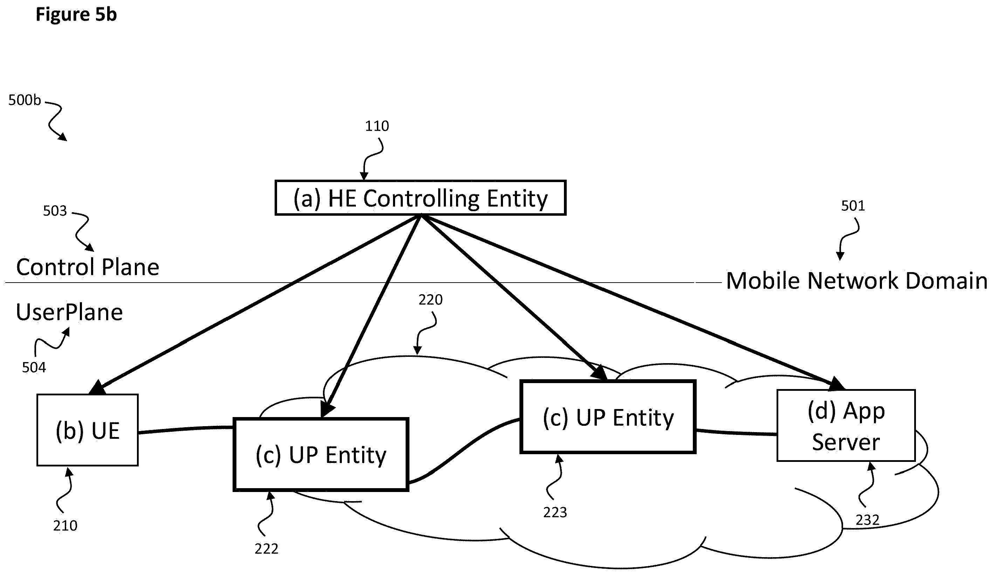

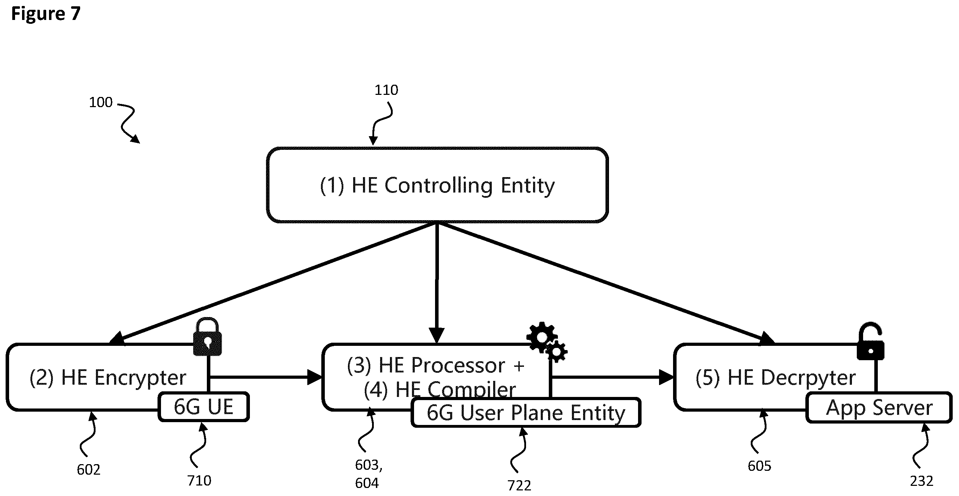

A User Equipment, UE, 210, 710, e.g., as shown in Figures 2, 5a, 5b, 7, may be configured to act as a cryptographically configurable data entity 120 as described above. The UE 710 may be configured to: generate the data traffic 121; encrypt 122 the data traffic 121 according to the encryption configuration parameters 131 to provide the first encrypted data traffic 123; and transmit the first encrypted data traffic 123 to a user plane entity 222, 223, 722, e.g., as shown in Figures 5a, 5b and 7.

The UE 210, 710 may further be configured to: receive the second encrypted data traffic 126 from the user plane entity 722; and decrypt 127 the second encrypted data traffic 126 according to the encryption configuration parameters 131 to provide the decrypted data traffic 128.

A user plane entity 722, e.g., as shown in Figures 5a, 5b, 7, may be configured to act as a cryptographically configurable data entity 120 as described above. The user plane entity 722 may be configured to: receive the first encrypted data traffic 123 from a UE, 210, 710, e.g., as shown in Figures 2, 5a, 5b, 7, or from an application server 232, e.g. as shown in Figure 2, 5a, 5b, 7, or from another user plane entity; transform the first encrypted data traffic 123 to the second encrypted data traffic 126 by applying the second microservice 125 to the first encrypted data traffic 123; and transmit the second encrypted data traffic 126 to the UE 710 or to the application server 232 or to another user plane entity.

The user plane entity 722 may comprise: an encryption processor 603, e.g., as shown in Figure 6, configured to transform the first encrypted data traffic 123 to the second encrypted data traffic 126 by applying the second microservice 125 to the first encrypted data traffic 123.

The user plane entity 722 may comprise: an encryption compiler 604, e.g., as shown in Figure 6, being configured to convert the first microservice 124 to the second microservice 125. The encryption compiler 604 may be integrated into the encryption processor 603.

An application server 232, e.g., as shown in Figure 2, may be configured to act as a cryptographically configurable data entity 120 as described above. The application server 232 may be configured to: receive the second encrypted data traffic 126 from a user plane entity 722, e.g., as shown in Figure 7 and described above; decrypt 127 the second encrypted data traffic 126 according to the encryption configuration parameters 131 to provide the decrypted data traffic 128.

The application server 232 may be configured to: generate the data traffic 121; encrypt 122 the data traffic 121 according to the encryption configuration parameters 131 to provide the first encrypted data traffic 123; and transmit the first encrypted data traffic 123 to the user plane entity 722.

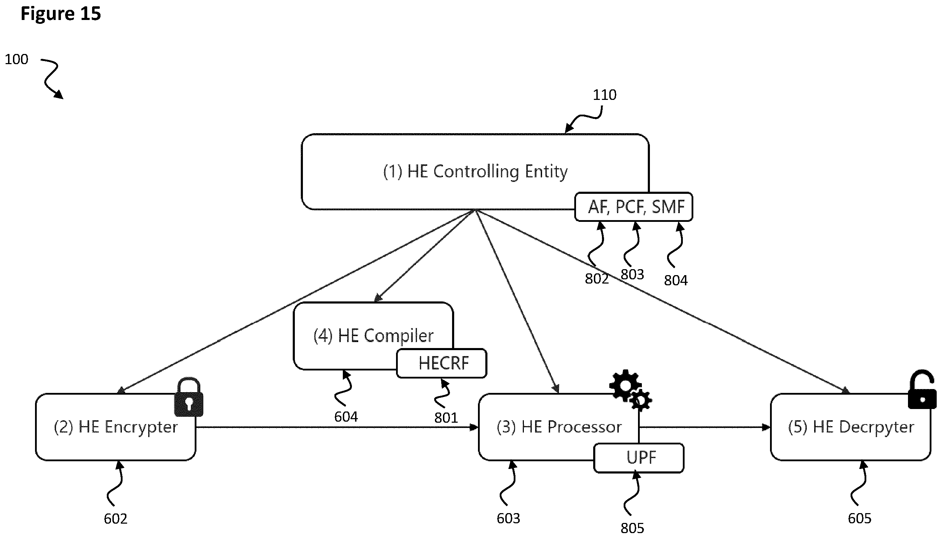

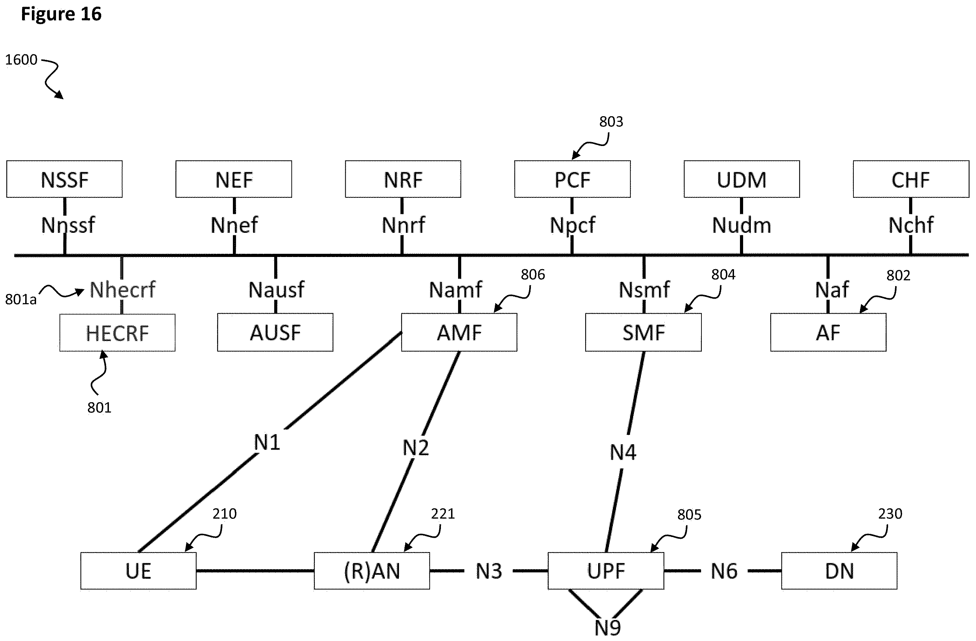

A network function entity 801, e.g., as shown in Figures 15 and 16, may be configured to act as a cryptographically configurable data entity 120 as described above. The network function entity 801 may comprise an encryption compiler 604 being configured to convert the first microservice 124 to the second microservice 125. The network function entity 801 may be configured to transmit the second microservice 125 to a user plane entity 722 as described above via a dedicated network interface 801a, e.g., as shown in Figure 16.

The network function entity 801 may be configured to store a set of second microservices 125 converted by the encryption compiler 604 according to a respective set of encryption configuration parameters 131. A set of first microservices 124 may be stored by the network function entity 801, as well.

The encryption controlling entity 110 shown in Figure 1 can be used for controlling data traffic 121 processing in a communication network 100. The encryption controlling entity 110 comprises: a control interface 130 for providing encryption configuration parameters 131 over the communication network 100 to a cryptographically configurable data entity 120.

The encryption configuration parameters 131 are enabling the cryptographically configurable data entity 120 to:
- encrypt 122 the data traffic 121 according to the encryption configuration parameters 131 to provide first encrypted data traffic 123;
- convert a first microservice 124 to a second microservice 125 based on the encryption configuration parameters 131, the first microservice 124 comprising rules for carrying out computations on the data traffic 121, the second microservice 125 comprising rules for carrying out computations on the first encrypted data traffic 123;
- transform the first encrypted data traffic 123 to second encrypted data traffic 126 by applying the second microservice 125 to the first encrypted data traffic 123; and
- decrypt 127 the second encrypted data traffic 126 according to the encryption configuration parameters 131 to provide decrypted data traffic 128 such that the decrypted data traffic 128 corresponds to the non-encrypted data traffic 121 transformed by the first microservice 124.

The encryption controlling entity 110 may be configured to determine the encryption configuration parameters 131 based on information stored in the encryption controlling entity 110 and/or information received over the communication network 100 and/or information obtained from other encryption controlling entities 110.

The encryption controlling entity 110 may comprise at least one or a combination of the following network function entities according to 5G standardization: a session management function, SMF, entity, a policy control function, PCF, entity, an application function, AF, entity.

In summary, as denoted in Figure 1, the following entities are involved in the communication network 100:
(1) The Encryption Controlling Entity 110 which is programming the UP entities 120 and defining the encryption usage (encryption scheme and encryption scheme-specific parameter setting). Encryption can be Homomorphic Encryption (HE), for example.
(2) The User Plane Entities 120, e.g., 5G or 6G User Plane Entities, with the enhancements of:
   - being able to receive microservice f and the HE configuration parameters so to compute the encryption-enabled microservice f* from f, or being able to directly receive f*, and being capable to carry out the encryption-enabled microservice f* on encrypted traffic. Encryption can be Homomorphic Encryption (HE), for example.
   - being able to encode, encrypt, decode, and decrypt encrypted traffic using the specified encryption parameter set 131.
(3) The interface 130 between the Encryption Controlling Entity 110 and the encryption-enabled UP Entities 120 via which the programming is carried out.

Figure 2 shows a schematic diagram illustrating a Communication and Compute Flow (Com²P-Flow) in a communication network 200.

Communication and Compute Flows (Com²P-Flows) allow computation management in the 6G system on a per-flow level. They can be seen as an evolution of QoS Flows, an existing concept from 5G networks, allowing QoS management on a per-flow level. QoS Flows enable the tailored treatment of packets 211 belonging to distinct flows in the user plane according to their needs.

Details of Com²P-Flows and In-Network Computing (INC) are described by "Schwarzmann, S. et al. (2023). An Intelligent User Plane to Support In-Network Computing in 6G Networks. In IEEE ICC". Figure 2 as described in the following illustrates the basic scheme.

The key advancement introduced with Com²P-Flows is that - besides treating the flows in the specified QoS-aware manner - the enhanced UP entities 221, 222, 223 carry out computations on Com²P-Flow packets 211, according to the microservice(s) associated to that flow. The packets' payload data may hence be modified along the way from sender 210 to receiver 232.

Figure 2 illustrates a Com²P-Flow between a UE 210 and an App Server 232, whereby the Com²P-Flow (from UE 210 until the DN 230 through communication network 220) is denoted as 201. The Com²P-Flow 201 has an associated Com²P-Profile 224, which specifies the computations to carry out on the flows packets 211 and provides any relevant information for the computations. As denoted in the Figure, the payload of the packets sent from the UE 210 differs from the payload of the packets 233 received by the App Server 232, due to the computations carried out on them.

The term microservice (f) as described in this disclosure refers to computations carried out in the enhanced UP entities 221, 222, 223 and on the Com²P-Flows 201, 202 as shown in Figure 2. That is, a microservice f unites all computational instructions and precisely describes the actions to be executed on a flow's packets.

Two types of such micro-services are envisioned: Firstly, pre-defined microservices: Those represent generic computations, which can be useful for a wide range of applications. As they are foreseen to be frequently used, all - or at least a large set of - UP entities would support these compute services off the shelf. Secondly, customized microservices: Those represent highly specific computations, e.g., well-tailored to the particular needs of a given application. While such customized microservices offer a high degree of flexibility to the application, they cannot be supported by a large set of UP entities per se. The deployment of a customized microservices at the UP entities in charge, i.e., those connecting the application flow's end points, can be initiated via the AF.

An application provider can communicate the desired microservices, e.g., in the form of an execution script, to the 6G system's orchestration and management (OAM). If the request is accepted, the new microservice can be deployed and the application's packets are processed in the network as specified by the application provider.

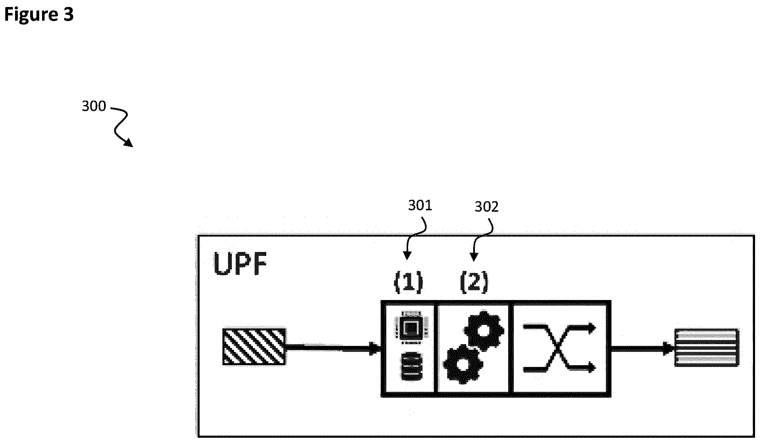

Figure 3 shows a schematic diagram illustrating a User Plane Function Entity 300 with physical/virtual and logical enhancements to support INC.

Compared to state-of-the-art UP entities (i.e. AN and UPF), dedicated to communication only, the UP entities according to this disclosure are significantly enhanced in terms of computational resources, i.e., CPU, GPU, RAM, and storage (denoted as (1), 301 in Figure 3). Two realizations of enhanced UP entities are envisioned: Firstly, a general-purpose UP entity, potentially running on virtualized infrastructure, so as to scale it dynamically to the current needs, e.g., number of active flows or complexity of the conducted computations. This realization has the benefit that it can carry out any arbitrary tasks, but it is potentially slow as computations are done in software. Secondly, a specific-purpose UP entity, potentially with dedicated hardware-acceleration, with the key benefit of being able to process packets at line-rate, which however comes with the limitation of being applicable only for very particular tasks.

Besides these enhancements in terms of the computational resources, the UPF capable of performing INC according to this disclosure has logical enhancements (denoted as (2), 302 in Figure 3). That is, a logical entity which allows to execute the specified compute logics.

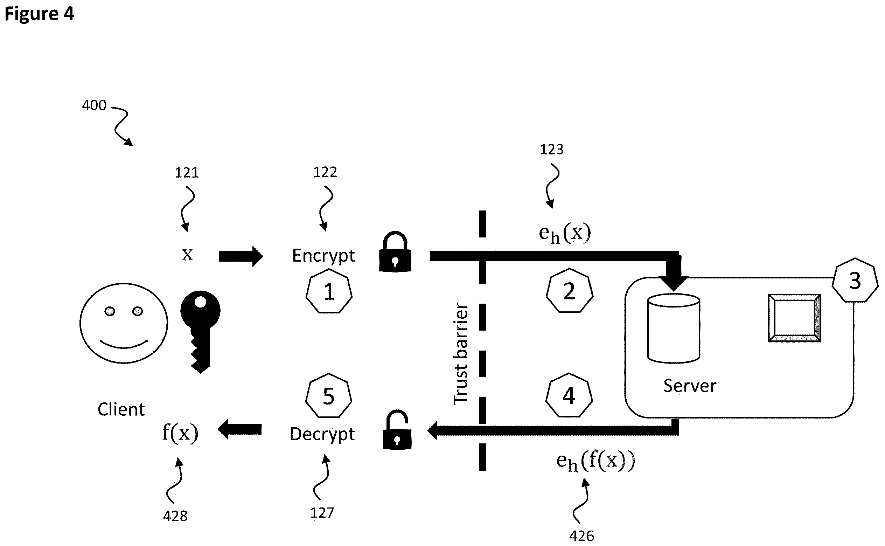

Figure 4 shows a schematic diagram illustrating Homomorphic Encryption 400.

Homomorphic Encryption as described in this disclosure can be defined as follows: "Homomorphic Encryption (HE) is a kind of encryption scheme that allows a third party (e.g., cloud, service provider) to perform certain computable functions on the encrypted data while preserving the features of the function and format of the encrypted data. Indeed, this homomorphic encryption corresponds to a mapping in the abstract algebra. As an example for an additively HE scheme, for sample messages m1 and m2, one can obtain E(m1 + m2) by using E(m1) and E(m2) without knowing m1 and m2 explicitly, where E denotes the encryption function."

That means, Homomorphic Encryption (HE) is an encryption technique, which allows to compute on the encrypted traffic without the need of decrypting it with a secret key. The basic working principle is denoted in Figure 4 illustrating how Homomorphic Encryption allows untrusted parties to operate on encrypted traffic.

A client has sensitive data x, 121, which it encrypts 122 using its secret key. Everything outside the client's local machine (denoted as the trust barrier) is assumed not be trusted. The client sends her encrypted data (Encrypted(x), 123) to the server for evaluation. The server runs a HE-enabled program (f), designed in such a way that it is capable of carrying out the computation on the user data, encrypted using a specific scheme and using a specific setting of involved HE parameters. Please note that the scheme and the parameter setting need to be aligned between the client and server. The processed and encrypted data (Encrypted f(x), 426) is sent back to the client, which uses its secret key for decrypting it, 127. The de-crypted result (f(x), 428) is identical to what would have been the result, if the computation f would have been applied to the unencrypted data x, 121.

The following three types of homomorphic encryption can be distinguished, which differ with respect to the type of supported operations and the frequency with which such operations can be applied to a ciphertext:
1. Partially homomorphic encryption (PHE): Only one type of mathematical operation is allowed on the cyphertext, either multiplication or addition. Translated to the circuit-based operations of HE, this means that only one type of gate may be used. The one operation can be carried out unlimited times.
2. Somewhat homomorphic encryption (SHE): Both types of mathematical operations, i.e. addition and multiplication, are allowed. For instance, it can evaluate two types of gates. However, the number of total operations is limited.
3. Fully homomorphic encryption (FHE): Allows a large number of different types of evaluation operations on the encrypted data with infinite number of times. That is, any arbitrary circuit, composed of multiple types of gates and with unlimited depth is supported. Hence, FHE is the strongest notion of homomorphic encryption.

The disclosure relates to any of the above-mentioned types of homomorphic encryption. In addition, the solution presented in is disclosure is applicable to any other encryption techniques allowing to compute on the encrypted traffic, e.g. potentially other lattice-based cryptography schemes.

Depending on the underlying HE scheme, a couple of different parameters need to be selected, which is not a trivial task. The parameters on the one hand need to provide the necessary level of security, but should still be efficient. How to set the parameters appropriately depends on the underlying data and on the computations to carry out. The more complex a computation is, the larger plain-text and cipher-text moduli need to be selected. Consequently, there is no standardized set of secure parameter choices and the parameter selection still remains an issue with HE applications.

For this disclosure, it is noted that (i) the HE parameters need to be aligned among the involved entities (e.g. the client producing the data and the entity processing the encrypted data), (ii) the parameter setting depends on the specific requirements of the application (underlying data and involved computations), and (iii) different HE schemes may involve different HE parameters. The HE parameters used with HE schemes are as follows:
- Plaintext modulus (t): integer modulus used to reduce the coefficients of plaintext polynomials;
- Polynomial modulus (n): Number n denotes the maximum number of terms in the polynomials used to represent both plaintext and ciphertext elements. Typically, a polynomial modulus has the form *xⁿ* + 1;
- Ciphertext modulus (q): Integer modulus used to reduce the coefficients of ciphertext polynomials.

Applications/computation logics need to be transformed in a specific form so to allow to use them on HE encrypted data. There are a couple of key differences between traditional programming paradigms and HE specific computation models. That is, e.g., HE computations per definition are data-independent and hence cannot perform data-depending branching like if/else statements and loops.

Therefore, HE computations are frequently conceptualized as circuits, i.e., gates (or operations) connected by wires, where the execution follows the same steps, no matter what values the input has. While it is possible to emulate, e.g., if/else branches by calculating the result for both branches and performing a multiplexing selection afterward, this requires evaluating both branches.

Without tool support, realizing HE-based computations by implementing the required mathematical operations directly or using an arbitrary-precision arithmetic library is complex, requiring considerable expertise in both cryptography and high-performance numerical computation. Therefore, HE libraries like the Simple Encrypted Arithmetic Library (SEAL) as described by "N. Samardzic, A. Feldmann, A. Krastev, S. Devadas, R. Dreslinski, C. Peikert and D. Sanchez, "F1: A fast and programmable accelerator for fully homomorphic encryption," in MICRO-54: 54th Annual IEEE/ACM International Symposium on Microarchitecture, 2021" or the Fast Fully Homomorphic Encryption Library over the Torus (TFHE) as described by "A. Viand, P. Jattke and A. Hithnawi, "SoK: Fully homomorphic encryption compilers," in IEEE Symposium on Security and Privacy, 2021" implement the underlying cryptographic operations and expose a higher-level API. These APIs provide functionality for key generation, encryption, decryption, and operations like addition and multiplication.

In recent years several higher-level tools have been developed, referred to as HE compilers. They translate standard programs (in the present disclosure microservices f) into HE-conform computation logics (in the present disclosure f*).

Figure 5a shows an exemplary network scenario 500a where the application server is located in the data network outside the mobile network domain. Figure 5b shows an exemplary network scenario 500b where the application server is located within the mobile network domain (e.g. MEC server).

Figures 5a and 5b illustrate a system to which the HE-enabled IUP solution applies. The HE Controlling Entity 110 resides in the 3GPP Control Plane (CP) 503 of the mobile system 501. It programs the involved UP entities 210, 222, 223 (e.g. UE, AN, UPF in 5G terms) for the HE usage. This allows to achieve the necessary alignment between all entities.

The HE Controlling Entity 110 can be a single entity or the controlling entity 110 may consist of several entities (e.g. a multitude of control plane NFs), where the different entities fulfill different logical tasks. Furthermore, the programming of the UP entities 210, 222, 223 and the application server 232 can be performed directly or indirectly, i.e., not necessarily are direct interfaces between the entities. The App Server 232 may be located outside the mobile network 501 in the data network 502 according to Figure 5a or it may reside within the mobile domain 501 according to Figure 5b.

Figure 6 shows a communication network 100 with a HE controlling entity 110, a HE Encrypter, a HE processor, a HE compiler and a HE decrypter according to the disclosure.

Figure 6 thus illustrates the five key involved entities, which are: (1) The HE Controlling Entity 110 which is (directly or indirectly) programming the other entities. Solid arrows denote the programming, the dashed arrow denotes optional programming. The figure further illustrates (2) the HE Encrypter 602, (3) The HE Processor 603 and (4) the HE Compiler 604. Please note that the HE Compiler 604 can be integrated into the HE Processor 603. In this case, no dedicated programming of the HE Compiler 604 is required. Finally, the figure shows (5) the HE Decrypter 605. The HE Encrypter 602 and HE Decrypter 605 can be realized by the same UP entity, e.g. a single UE. Furthermore, more than one HE Processor 603 can be present.

The following parts introduce the tasks and of the different entities in more detail.

The HE Controlling Entity 110 ensures the appropriate setting of the HE configuration (HE scheme and parameter setting) so to satisfy the application 's requirements and to have an aligned setting among all involved entities (HE Encrypter 602, HE Decrypter 605, HE Processor 603, and HE Compiler 604). The HE Controlling Entity 110 programs all other involved entities as it can be a single CP instance (e.g. the AF), or it can logically be composed of a multitude of CP NFs (e.g. PCF, SMF in 5G terms).

The HE Encrypter 602 is the source of data x and hence one end-point of an HE-enabled Com²P-Flow. That is, it can be the UE, a server in the Data Network (DN), or an MEC server in the 3GPP system. The HE Encrypter 602 needs a public key (pk) for encrypting the data.

The HE Processor 603 is the UP entity which carries out the HE-conform microservice(s) on the HE traffic, i.e., it performs f*(x). Hence, it is an intermediary node between the two end-points of an HE-enabled Com²P-Flow in the UP. In 5G terms, this is the AN or the UPF, or both. More than one HE Processor 603 can be involved.

The HE Compiler 604 transforms a microservice f to an HE-conform microservice f*. Thereby, the HE-conform microservice f* must be compatible with the used HE scheme and with the HE scheme-specific parameter setting as determined by the HE Controlling Entity 110. This includes parameters such as the modulus degree, the ciphertext modulus, and the plaintext modulus. The HE Compiler 604 is not necessarily an entity on its own, but it can be a (sub-)component directly integrated into the HE Processor 603.

The HE Decrypter 605 is the destination and receives the processed data f*(x). Next to the HE Encrypter 602, the HE Decrypter 605 is the second end-point of an HE-enabled Com²P-Flow. That is, it can be the UE, a server in the DN, or an MEC server in the 3GPP system. Please note that the HE Decrypter 605 can simultaneously be the HE Encrypter 602. For decrypting the received data, the HE Decrypter 605 needs a secret key (sk).

Figure 7 shows a communication network 100 with a HE controlling entity 110 and a specific realization of a HE Encrypter, a HE processor, a HE compiler and a HE decrypter according to an embodiment.

Figure 7 is a specific realization for the involved HE entities relating to the UP: A 6G UE 710 acts as the HE Encrypter 602, a 6G User Plane Entity 722 acts simultaneously as the HE Processor 603 and as the HE Compiler 604 and an App Server 232 is the HE Decrypter 605.

For this specific realization of the entities, denoted in Figure 7, a detailed description of the involved steps and the HE parameters is given in the following with respect to Figure 8.

Figure 8 shows an exemplary network scenario 800 with a HE controlling entity 110 and a specific realization of a HE Encrypter, a HE processor, a HE compiler and a HE decrypter according to an embodiment.

Following steps are involved in this network scenario 800.

The HE Controlling Entity 110, residing in the CP (control plane) 503, programs the 6G UE 710 (acting as the HE Encrypter 602). Therefore, the HE Controlling Entity 110 communicates the HE scheme 132 and the related parameters 133 (plaintext modulus, ciphertext modulus, polynomial modulus). This can be done directly or indirectly (direct interfaces or a sequence of involved interfaces). According to the specifications provided via the HE Controlling Entity 110, the 6G UE 710/HE Encrypter 602 applies Homomorphic Encryption *eₕ* 122 to the data x 121, resulting in *eₕ*(*x*) 123.

One 6G UP Entity 722 acts as the HE Processor 603 and has the HE Compiler 604 integrated. It is assumed that the microservice f is already available at the respective UP entity 722. Using the communicated parameter setting 131, the HE Compiler 604 translates f to f*, where f corresponds to 124 according to Figure 1 and f* corresponds to 125 according to Figure 1. The HE-enabled microservice f* 125 is then applied to the UE's encrypted traffic *eₕ*(*x*) 123, resulting in *f**(*eₕ*(*x*)) 126, the processed HE traffic.

Finally, the app server 232 acts as the HE Decrypter 605 which receives the homomorphically encrypted processed output *f**(*eₕ*(*x*)) 126. By means of the provided HE parameter set 131, it is capable of running the decryption ${e}_{h}^{- 1} 127$ on the received encrypted processed data 126. For instance, the HE Decrypter 605 evaluates ${e}_{h}^{- 1} \left(f*\left({e}_{h}\left(x\right)\right)\right)$, which equals *f*(*x*) 128, i.e., as if microservice f 124 would have been applied on non-encrypted data x 121.

Following HE parameters are involved in this network scenario 800.

The information used by the HE Controlling Entity 110 to program the other entities can differ depending on i) the computation to carry out (f/f*) and ii) the specific HE scheme 132 that is used. In any case, the HE scheme 132 to use has to be communicated to all entities. The HE Decrypter 605 and the HE Encrypter 602 are provided with a plaintext modulus, which is necessary for encoding and decoding the plaintext data. Depending on f* 125, the plaintext modulus is optional for the HE Processor 603. If f* 125 is only using encrypted data, no plaintext modulus is required at the HE Processor 603. If f* 125 is operating on plaintext and ciphertext (e.g. a multiplication of plaintext integer with a ciphertext integer), the HE Processor 603 needs to have the plaintext modulus.

Furthermore, ciphertext modulus and the polynomial modulus are communicated from the HE Controlling Entity 110 to the HE Encrypter 602 and HE Decrypter 605, which respectively use these parameters for the encryption and decryption. The ciphertext modulus and the polynomial modulus are also required by the HE Compiler 604, to prepare f* 125 accordingly, and by the HE Processor 604 to carry out f* 125 properly.

The HE entities introduced above (HE Controlling Entity 110, HE Encrypter 602, HE Decrypter 605, HE Compiler 604, HE Processor 603) can be realized by different network entities in different ways. The HE Processor 603 can be realized by a User Plane Function and/or an Access Node. The HE Encrypter 602 and the HE Decrypter 605 can be realized by a UE and/or an (MEC) app server. The HE Compiler 604 can be integrated in the HE Processor 603, or it can be a dedicated CP NF. Note that while any of the combinations is possible, one UE should typically be involved as one end-point of the flow and hence, the following embodiments focus on these possible key realizations. Moreover, any combinations of the presented embodiments are possible.

The following embodiments show different possible realizations for the HE Encrypter 602 and the HE Decrypter 605.

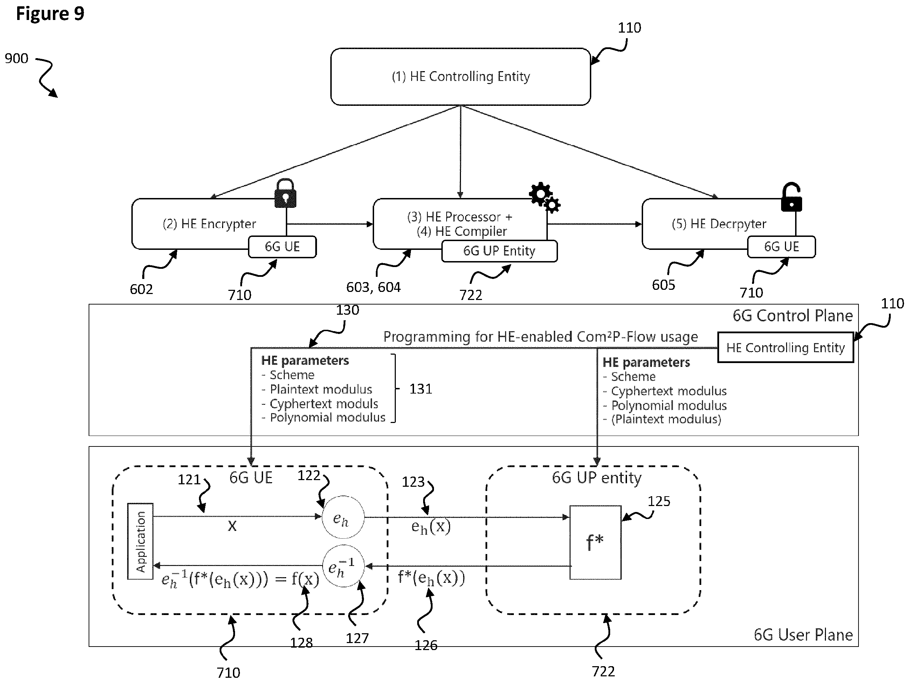

Figure 9 shows an exemplary network scenario 900 with a HE controlling entity 110 and a 6G UE 710 as HE Encrypter and HE Decrypter according to an embodiment.

In the embodiment of Figure 9, UE is acting as both, HE Encrypter 602 and HE Decrypter 605. In Figure 9 the same 6G UE 710 is the source of data x 121 and the destination of the processed data f*(x). Accordingly, the UE 710 acts as both, the HE Encrypter 602 (for encrypting x 121) and the HE Decrypter 605 (for decrypting f*(x)). The HE Controlling Entity 110 programs the UE 710 for HE usage with the respective parameters 131 of the used HE scheme 132. The 6G UP entity 722 (e.g. a User Plane Function or the AN) acts as the HE Processor 603, the HE Compiler 604 is integrated into the HE Processor 603, and the HE Processor 603 is programmed by the HE Controlling Entity 110.

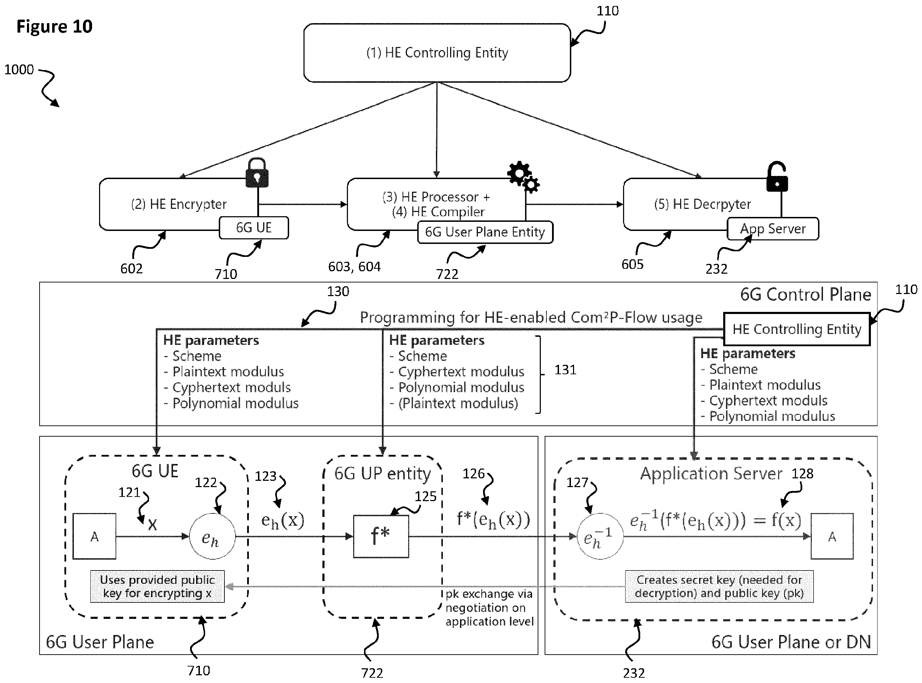

Figure 10 shows an exemplary network scenario 1000 with a HE controlling entity 110 and a 6G UE 710 as HE Encrypter and an application server 232 as HE Decrypter according to an embodiment.

In the embodiment of Figure 10, UE 710 acts as HE Encrypter 602 and Application Server 232 acts as HE Decrypter 605. In the case denoted in Figure 10, the 6G UE 710 is the source of data (x) 121 and hence acts as the HE Encrypter 602. The UE 710 is programmed by the HE Controlling Entity 110 with the respective parameters 131 of the used HE scheme 132. Similarly, the HE Controlling Entity 110 programs the 6G UP entity 722 (e.g. a User Plane Function or an AN) which acts as the HE Processor 603 with the integrated HE Compiler 604. The Application Server 232 is the receiver of the processed data f*(x) and hence acts as the HE Decrypter 605. From the perspective of the UE 710, in this embodiment, the HE-enabled 6G Com²P-Flow is applied to uplink traffic.

For decrypting the data at the application server 232, the server needs to have a secret key (sk). For encrypting the data at the UE 710, the UE 710 needs the public key (pk) corresponding to the secret key. The secret key and the public key must preserve a given mathematical relationship, i.e., they need to be generated simultaneously at the same instance. As secret keys are per convention never shared, the entity which needs the secret key (the application server in this embodiment) is in charge of generating the secret key and the respective public key. The public key has to be shared with the HE Encrypter 602 (the 6G UE 710 in this embodiment). This negotiation happens on application level once the session is established.

The programming of the application server 232 by the HE Controlling Entity 110 is optional, depending on (i) the specific realization of the Application Server 232 (e.g. residing within the mobile domain (MEC server) versus in the DN (remote server)) and (ii) the specific realization of the HE Controlling Entity 110. For instance, the HE Controlling Entity 110 can be an AF of the application provider, making a dedicated programming via the mobile system not necessary.

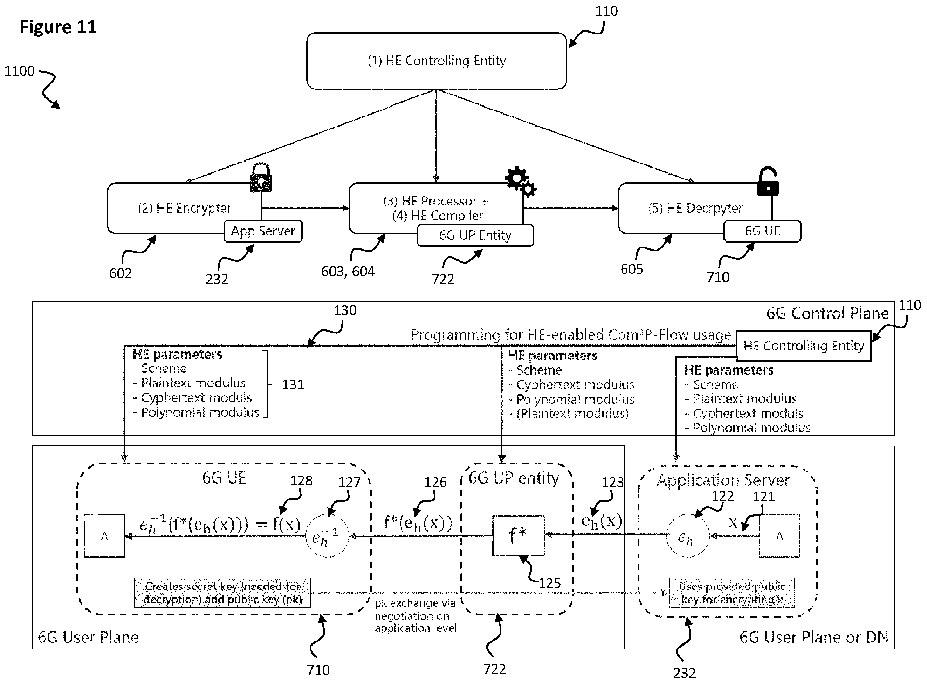

Figure 11 shows an exemplary network scenario 1100 with a HE controlling entity 110 and a 6G UE 710 as HE Decrypter and an application server 232 as HE Encrypter according to an embodiment.

In the embodiment of Figure 11, the application Server 232 acts as HE Encrypter 602 and UE 710 acts as HE Decrypter 605. I.e., Figure 11 denotes the case where the Application Server 232 acts as the HE Encrypter 602, i.e.., source of data x 121, and the 6G UE 710 acts as the HE Decrypter 605, i.e., it is the destination of processed data f*(x). The UE 710 as the HE Decrypter 605 needs the secret key (sk) for decrypting f*(x) and the Application Server 232 needs the corresponding public key (pk) for encrypting x. As per design, secret keys are never shared and due to the fact that a given mathematical relationship must be preserved between the secret key and the public key, the UE 710 creates both, secret and public key. The public key exchange (from UE 710 to the Application Server 232) is realized via negotiation on application level. The HE Controlling Entity 110 is programming the 6G UE 710 and the 6G UP entity 722 in such away, that they are aligned with respect to the used HE scheme 132 and its specific parameter setting 131.

Same as before, the programming of the application server 232 by the HE Controlling Entity 110 is optional, depending on (i) the specific realization of the Application Server 232 (e.g. residing within the mobile domain (MEC server) versus in the DN (remote serve) and (ii) the specific realization of the HE Controlling Entity 110. For instance, the HE Controlling Entity 110 can be an AF of the application provider, making a dedicated programming via the mobile system unnecessary.

From the perspective of the UE 710, in this embodiment, the HE-enabled 6G Com²P-Flow is applied to downlink traffic.

The task of the HE Compiler 604 is to transform a microservice f to f* in such a way that it is compatible with the HE scheme 132 and the respective parameter setting 131 as communicated by the HE Controlling Entity 110. Therefore, the HE Compiler 604 is equipped with all tools and logics needed for the translation.

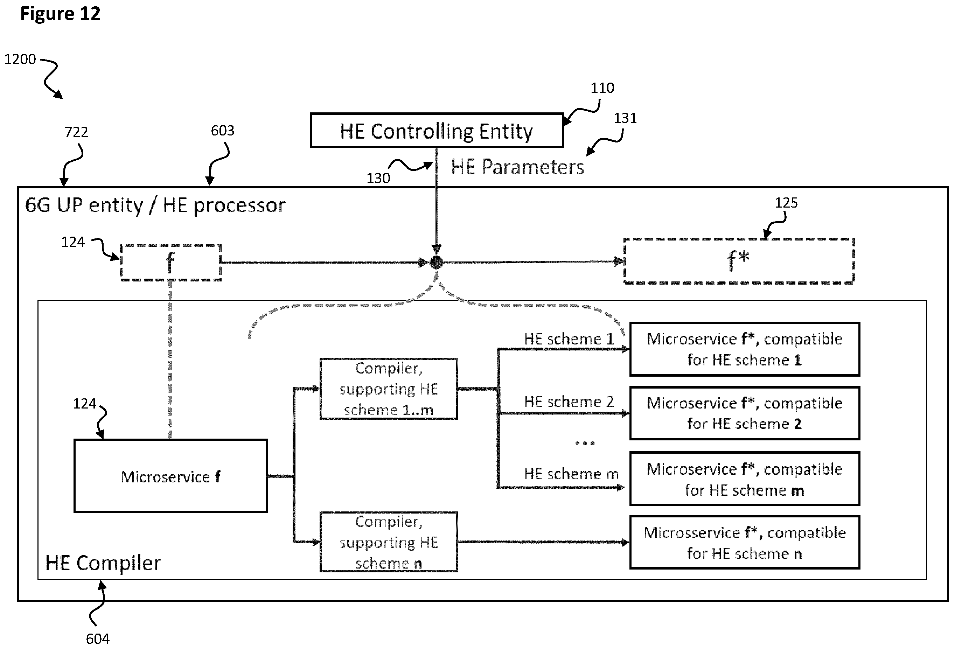

Figure 12 shows an exemplary network scenario 1200 with a HE controlling entity 110 and a HE Compiler 604 integrated into the 6G UP entity 722/HE processor 603 according to an embodiment.

In the embodiment of Figure 12, the HE Compiler 604 is integrated into the HE Processor 603 and thus resides in the 6G UP Entity 722. There is no need to dedicatedly program the HE Compiler 604 via the HE Controlling Entity 110, only indirectly via the HE Processor 603.

Figure 12 shows that via the HE Controlling Entity 110, the HE Processor 603/6G UP Entity 722 receives the HE parameters 131 to use (via the interface 130). The HE Compiler 604 is capable of compiling f to f* such that f* suffices the HE scheme 132 and the HE parameters 131 (which it obtains from the HE Controlling Entity 110). Depending on the scheme 132, different compilers might need to be used, the HE Compiler 604 is equipped with a set of translation logics to compile f*.

In a second embodiment for the HE Compiler 604, it is a dedicated NF in the control plane. Besides compiling f to f* with the specified HE parameter set 131, it may be capable to store a set of f* (second microservices 125) and/or a set of f (first microservices 124). That is, the dedicated NF for compiling HE-conform microservices can serve as a repository. This allows to re-use f* if it is required by more than one HE Processor 603.

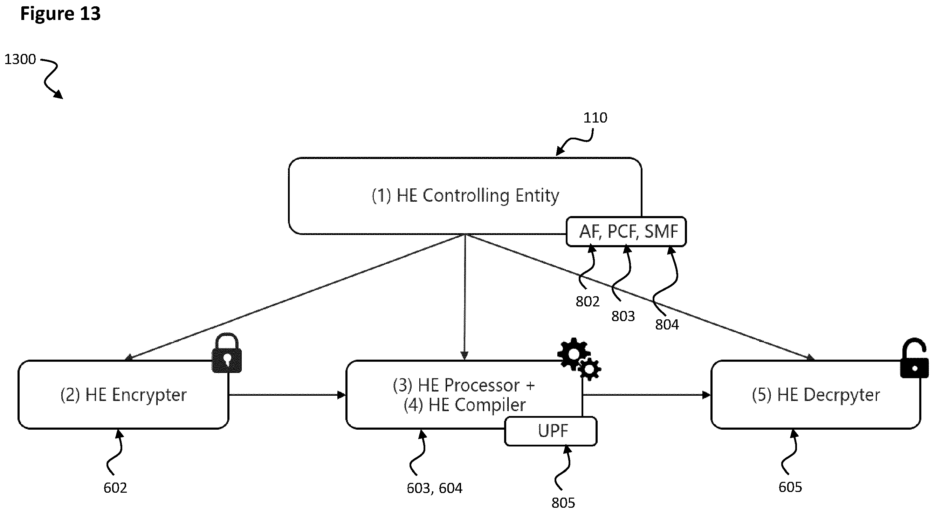

The following Figures 13 to 18 represent embodiments for 5G Advanced.

In the following 5G embodiments, the HE Controlling Entity 110 is composed of the following 5G NFs: AF 802, PCF 803, SMF 804. The setup of the HE-enabled Com²P-Flow setup is described, considering different realizations of the HE Compiler 604. Further, it is assumed in the following description that the HE Processor 603 is the UPF 805. Please note that similarly, the AN can (additionally or exclusively) act as the HE Processor 603.

Figure 13 shows an exemplary network scenario 1300 with a HE controlling entity 110 and a HE Compiler 604 integrated into HE processor 603 (realized by the UPF 805) according to an embodiment.

The embodiment of Figure 13 shows HE-enabled Com²P-Flow Setup with the UPF 805/HE Processor 603 as HE Compiler 604.

In Figure 13, the case is considered, where the HE Compiler 604 is integrated into the UPF 805, which also acts as the HE Processor 603.

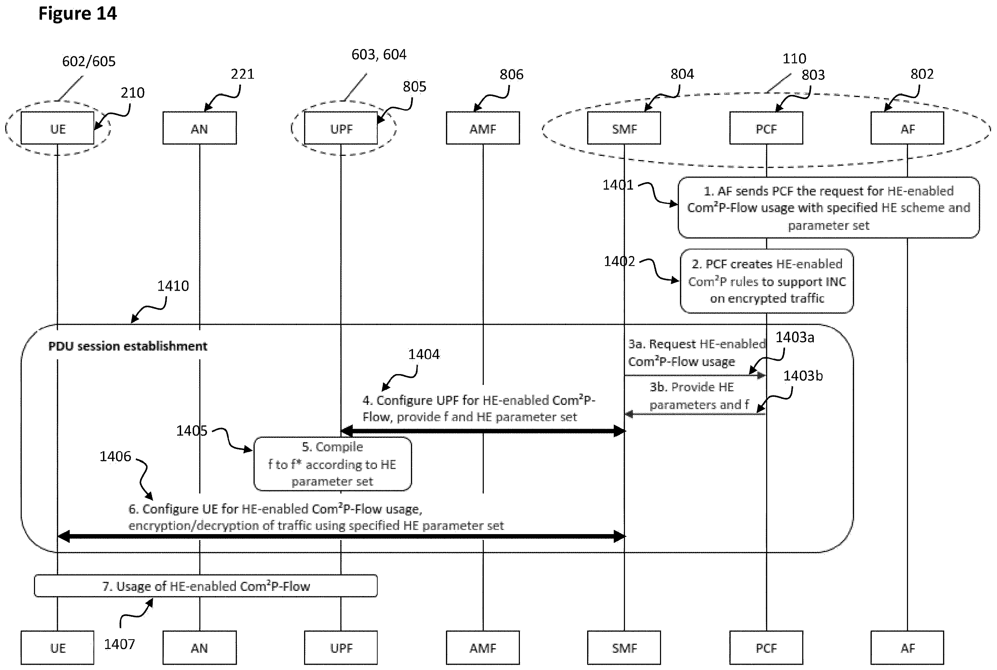

Figure 14 shows an exemplary message chart of NF interactions for HE-enabled Com²P-Flow setup with the UPF 805 being the HE Compiler according to an embodiment.

Figure 14 denotes the setup of an HE-enabled Com²P-Flow, when the HE Compiler 604 is component of the UPF 805, which also acts as the HE Processor 603. The UE 210 is HE Encrypter 602 or HE Decrypter 605 or both simultaneously. The HE Controlling Entity 110 is in this case composed of the AF 802, PCF 803, and SMF 804.

The procedure is as follows:

### 1. (Step 1, 1401)

The AF 802 indicates to the 5GC (PCF 803) to which sessions the HE-enabled Com²P- flow shall apply, and which microservice(s) f shall be used for the HE-enabled Com²P- Flow. In addition, it communicates all relevant HE parameters, i.e., the HE scheme 132 to apply and the respective parameter set 131.

### 2. (Step 2, 1402)

The 5GC (PCF 803) creates the Com²P-rules for the HE-enabled Com²P-Flow to be applied to a PDU Sessions along with all relevant HE parameters as indicated by AF 802.

During PDU session establishment 1410:

### 3a. (Step 3a, 1403a)

The SMF 804 requests the HE-enabled Com²P-Flow usage from PCF 803.

### 3b. (Step 3b, 1403b)

The PCF 803 provides the HE parameters and microservice(s) f (or the respective MS-IDs for the microservices) to the SMF 804.

### 4. (Step 4, 1404)

The SMF 804 configures the UPF 805 for HE-enabled Com²P-Flow usage, and provides f along with the specified HE parameters.

### 5. (Step 5, 1405)

The UPF 805 compiles f* from f according to the provided HE parameters.

### 6. (Step 6, 1406)

The SMF 804 configures the UE 210 for HE-enabled Com²P-Flow usage with the specified HE parameter set.

### 7. (Step 7, 1407)

HE encrypted UP Data for the HE-enabled Com²P-Flow is forwarded and processed as per AF 802 indication.

Figure 15 shows a communication network 100 with a HE controlling entity 110 and a specific realization of a HE Compiler 604 as a dedicated NF in the control plane according to an embodiment.

The embodiment of Figure 15 shows a dedicated new NF 801 as HE Compiler 604. I.e., Figure 15 shows the case, where the HE Compiler 604 is realized as a dedicated NF 801. This NF is referred to as the Homomorphic Encryption Compile and Repository Function (HECRF) 801. Due to its decapsulation from the HE Processor 603, it needs to be dedicatedly programmed by the HE Controlling Entity 110.

The HE Compiler 604 in this embodiment is a dedicated NF in the control plane. In this embodiment for 5G Advanced, the HECRF 801 may be connected via a new interface - the Nhecrf 801a - to the SBI, as denoted in Figure 16, to enable its programmability via the HE Controlling Entity 110 (composed in this embodiment of PCF 803, SMF 804, and AF 802).

Figure 16 shows a schematic diagram of a communication network 1600 with a new NF (HECRF) 801 dedicated for compiling and storing HE-conform microservices and/or non-HE-conform microservices connected to the SBI according to the disclosure.

The HECRF 801 provides a set of compiled HE-enabled microservices (f*) for a couple of schemes and parameter settings. In case a specific HE-conform microservice is not available, the HECRF 801 provides that microservice on demand (by compiling f* from f using the specified HE parameters). Hence, the HECRF 801 acts as a repository in the sense that it can store (conventional) microservices and HE-conform microservices and provide them to other NFs when they need them.

For requesting an HE-enabled microservice f* from the HECRF 801, two possible options are described in the following:
Option 1: The request for the HE-enabled microservice f* is invoked by the SMF 804. In this case the request is invoked by the HE Controlling Entity 110 / a CP NF.
Option 2: The request for the HE-enabled microservice f* is invoked by the UPF 805 which needs the specific HE-enabled microservice. In this case, the request is invoked by the HE Processor / a UP function.

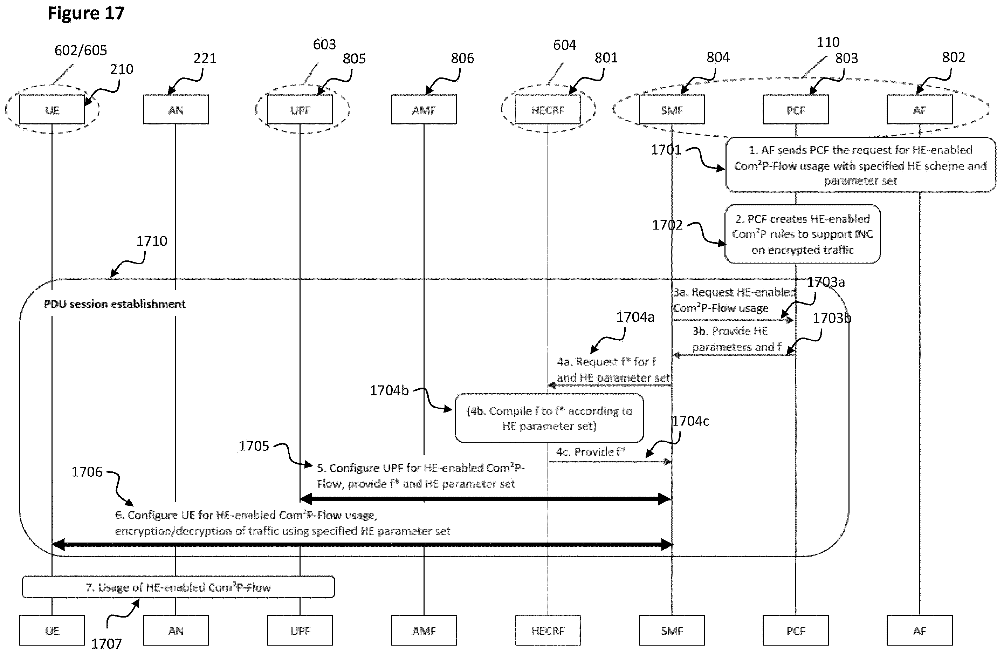

Figure 17 shows an exemplary message chart of NF interactions for HE-enabled Com²P-Flow setup with a new dedicated NF 801 being the HE compiler 604 according to a first option, where the compilation is initiated by the SMF 804.

Figure 17 denotes the establishment of an HE-enabled Com²P-Flow, when the HE Compiler 604 is implemented as the dedicated new NF, i.e. the HECRF 801 and using Option 1. The UPF 805 acts as the HE Processor 603, the UE 210 is the HE Encrypter 602 or HE Decrypter 605 or both. The HE Controlling Entity 110 is in this case again composed of the AF 802, PCF 803, and SMF 804.

The procedure is as follows:

### 1. (Step 1, 1701)

The AF 802 indicates to the 5GC (PCF 803) to which sessions the HE-enabled Com²P- flow shall apply, and which microservice(s) f shall be used for the HE-enabled Com²P- Flow. In addition, it communicates all relevant HE parameters, i.e., the HE scheme to apply and the respective parameter set.

### 2. (Step 2, 1702)

The 5GC (PCF 803) creates the Com²P-rules for the HE-enabled Com²P-Flow to be applied to PDU Sessions along with all relevant HE parameters as indicated by AF 802.

During PDU session establishment 1710:

### 3a. (Step 3a, 1703a)

The SMF 804 requests the HE-enabled Com²P-Flow usage from PCF 803.

### 3b. (Step 3b, 1703b)

The PCF 803 provides the HE parameters and microservice(s) f (or the respective MS-IDs for microservice(s) f) to the SMF 804.

### 4a. (Step 4a, 1704a)

The SMF 804 triggers a request for f* to the HECRF 801 and indicates the microservices(s) f and the HE parameter set.

### 4b. (Step 4a, 1704b)

Optional: The HECRF 801 compiles f to f* according to the provided HE parameters. The step of compiling f* can be skipped, if the HECRF 801 already holds f*, e.g. due to an earlier request and compilation of f* for the same HE scheme with the same HE parameters.

### 4c. (Step 4a, 1704c)

The HECRF 801 provides f* to the SMF 804.

### 5. (Step 5, 1705)

The SMF 804 configures the UPF 805 for HE-enabled Com²P-Flow usage and provides f* to the UPF 805 in charge.

### 6. (Step 6, 1706)

The SMF 804 configures the UE 210 for HE-enabled Com²P-Flow usage with the specified HE parameter set.

### 7. (Step 7, 1707)

HE encrypted UP Data for the HE-enabled Com²P-Flow is forwarded and processed as per AF indication.

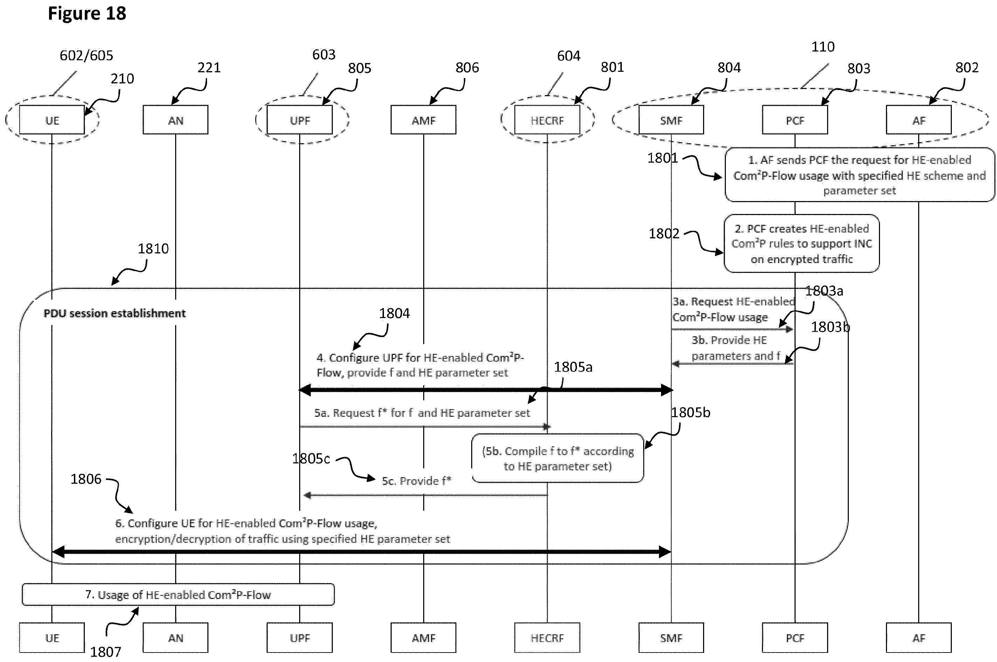

The same procedure but using Option 2 (the UPF 805 invoking the HE-enabled microservice request from the HECRF 801) is denoted in Figure 18.

Figure 18 shows an exemplary message chart of NF interactions for HE-enabled Com²P-Flow setup with a new dedicated NF 801 being the HE compiler 604 according to a second option, where the compilation is initiated by the UPF 805.

The procedure is as follows:

### 1. (Step 1, 1801)

The AF 802 indicates to the 5GC (PCF 803) to which sessions the HE-enabled Com²P- flow shall apply, and which microservice(s) f shall be used for the HE-enabled Com²P- Flow. In addition, it communicates all relevant HE parameters, i.e., the HE scheme to apply and the respective parameter set.

### 2. (Step 2, 1802)

The 5GC (PCF 803) creates the Com²P-rules for the HE-enabled Com²P-Flow to be applied to PDU Sessions along with all relevant HE parameters as indicated by AF 802.

During PDU session establishment 1810:

### 3a. (Step 3a, 1803a)

The SMF 804 requests the HE-enabled Com²P-Flow usage from PCF 803.

### 3b. (Step 3b, 1803b)

The PCF 803 provides the HE parameters and microservice f to the SMF 804.

### 4. (Step 4, 1804a)

The SMF 804 configures the UPF 805 for HE-enabled Com²P-Flow usage, provides f and the HE parameters.

### 5a. (Step 5a, 1805a)

The UPF 805 requests f* for microservice f and indicates the specified parameter set

### 5b. (Step 5b, 1805b)

Optional: The HECRF 801 compiles f to f* according to the provided HE parameters. The step of compiling f* can be skipped, if the HECRF 801 already holds f*, e.g. due to an earlier request and compilation of f* for the same HE scheme with the same HE parameters.

### 5c. (Step 5c, 1805c)

The HECRF 801 provides f* to the UPF 805.

### 6. (Step 6, 1806)

The SMF 804 configures the UE 210 for HE-enabled Com²P-Flow usage with the specified HE parameter set.

### 7. (Step 7, 1807)

HE encrypted UP Data for the HE-enabled Com²P-Flow is forwarded and processed as per AF indication.

Please note that for this option, a new interface would be necessary allowing the UPF 805 to communicate with the HECRF 801, which is a CP NF.

In a further embodiment, a dedicated existing NF (network function) can be used as HE Compiler. I.e, the HE Compiler 604 can be the component of any other existing NF.

Main points as presented in this disclosure are summarized in the following.
1. Programmability of the UP or 6G UP for the usage of INC with homomorphic encrypted traffic (usage of HE-enabled Com²P-Flows). This allows the usage of INC despite traffic encryption. No need to trust the computing party (e.g. the MNO).
2. HE Controlling Entity (e.g. AF) to specify the HE scheme and corresponding parameter setting. This advantageously leverages HE-enabled Com²P-Flow usage with the necessary alignment of HE scheme and corresponding parameter setting among all involved entities, so to satisfy the specific application's requirements.
3. Method to program UP entities for HE-enabled Communication and Compute Flows with HE parameter specified parameter set. Such method allows to carry out application-specific computations on encrypted traffic by untrusted third party/UP entities. It allows dynamic setting of the parameter as per application's specific needs and ensures the necessary alignment between UE and UP for HE usage.
4. 6G UP entities being programmable and capable of (i) receiving HE parameter set, (ii) transforming f to f* using the HE parameter set, and (iii) executing the HE-conform computations f* on encrypted Communication and Compute Flows. This allows usage of communication and compute flows / offloading of application-specific task to the UP despite encryption.
5. 6G UE being programmable for encoding, encrypting, decrypting, and de-coding the sent/received data using HE and the specified parameter set. This provides the advantage that UE is capable of preparing its data using HE and is capable of decrypting received and processed HE-encrypted data.

The solution presented in this disclosure is generally not limited to mobile networks. Similarly, the solution described herein can be applied to fixed networks. Apart from the usage of Homomorphic Encryption, any potential present or future type of encryption, which allows processing encrypted data, may be used with the solution presented in this disclosure.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other, regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the disclosure beyond those described herein. While the present disclosure has been described with reference to one or more particular embodiments, those skilled in the art recognize that many changes may be made thereto without departing from the scope of the present disclosure. It is therefore to be understood that within the scope of the appended claims and their equivalents, the disclosure may be practiced otherwise than as specifically described herein.

## Claims

1. A user plane entity (722) for processing data traffic (121) in a communication network (100), the user plane entity (722) comprising:
a control interface (130) for receiving encryption configuration parameters (131) over the communication network (100), the encryption configuration parameters (131) configuring the user plane entity (722) to:
encrypt (122) the data traffic (121) according to the encryption configuration parameters (131) to provide first encrypted data traffic (123);
convert a first microservice (124) to a second microservice (125) based on the encryption configuration parameters (131), the first microservice (124) comprising rules for carrying out computations on the data traffic (121), the second microservice (125) comprising rules for carrying out computations on the first encrypted data traffic (123);
transform the first encrypted data traffic (123) to second encrypted data traffic (126) by applying the second microservice (125) to the first encrypted data traffic (123); and
decrypt (127) the second encrypted data traffic (126) according to the encryption configuration parameters (131) to provide decrypted data traffic (128) such that the decrypted data traffic (128) corresponds to the non-encrypted data traffic (121) transformed by the first microservice (124);
the user plane entity (722) being further configured to:
receive the first encrypted data traffic (123) from a user equipment, UE (710), from an application server (232), or from another user plane entity;
transform the first encrypted data traffic (123) to the second encrypted data traffic (126) by applying the second microservice (125) to the first encrypted data traffic (123); and
transmit the second encrypted data traffic (126) to the UE (710), the application server (232), or the other user plane entity;
the user plane entity (722) comprising:
an encryption processor (603) configured to transform the first encrypted data traffic (123) to the second encrypted data traffic (126) by applying the second microservice (125) to the first encrypted data traffic (123); and
an encryption compiler (604) being configured to convert the first microservice (124) to the second microservice (125),
wherein the encryption compiler (604) is integrated into the encryption processor (603).

2. The user plane entity (722) of claim 1, the encryption configuration parameters (131) configuring the user plane entity (722)to:
transform the first encrypted data (123) to an intermediate encrypted data traffic by applying the second microservice (125) to the first encrypted data traffic (123); and
transform the intermediate encrypted data traffic to the second encrypted data traffic (126) or to another intermediate encrypted data traffic by applying the second microservice (125) to the intermediate encrypted data traffic.

3. The user plane entity (722) of claim 1 or 2,
wherein the encryption configuration parameters (131) comprise an encryption scheme (132), specifying characteristics of the encryption and decryption, and an encryption scheme-specific parameter set (133) which is a specific parameter set for the encryption scheme (132).

4. The user plane entity (722) of claim 3,
wherein the encryption scheme (132) is configured to support Homomorphic Encryption.

5. The user plane entity (722) of claim 3 or 4,
wherein the encryption scheme-specific parameter set (133) comprises at least one or a combination of the following:
a plaintext modulus,
a polynomial modulus, and
a ciphertext modulus.

6. The user plane entity (722) of any of the preceding claims, configured to act as at least one of the following entities:
an encryption entity (602), configured to encrypt the data traffic (121) providing the first encrypted data traffic (123);
an encryption compiler (604), configured to convert the first microservice (124) to the second microservice (125);
an encryption processor (603), configured to transform the first encrypted data traffic (123) to the second encrypted data traffic (126) by applying the second microservice (125) to the first encrypted data traffic (123); and
a decryption entity (605), configured to decrypt (127) the second encrypted data traffic (126) providing the decrypted data traffic (128).

## Patentansprüche

1. Benutzerebeneneinheit (722) zum Verarbeiten von Datenverkehr (121) in einem Kommunikationsnetzwerk (100), wobei die Benutzerebeneneinheit (722) Folgendes umfasst:
eine Steuerschnittstelle (130) zum Empfangen von Verschlüsselungskonfigurationsparametern (131) über das Kommunikationsnetzwerk (100), wobei die Verschlüsselungskonfigurationsparameter (131) die Benutzerebeneneinheit (722) zu Folgendem konfigurieren:
Verschlüsseln (122) des Datenverkehrs (121) gemäß den Verschlüsselungskonfigurationsparametern (131), um ersten verschlüsselten Datenverkehr (123) bereitzustellen;
Umwandeln eines ersten Mikrodienstes (124) in einen zweiten Mikrodienst (125) basierend auf den Verschlüsselungskonfigurationsparametern (131), wobei der erste Mikrodienst (124) Regeln zum Durchführen von Berechnungen an dem Datenverkehr (121) umfasst, wobei der zweite Mikrodienst (125) Regeln zum Durchführen von Berechnungen an dem ersten verschlüsselten Datenverkehr (123) umfasst;
Transformieren des ersten verschlüsselten Datenverkehrs (123) in zweiten verschlüsselten Datenverkehr (126) durch Anwenden des zweiten Mikrodienstes (125) auf den ersten verschlüsselten Datenverkehr (123); und
Entschlüsseln (127) des zweiten verschlüsselten Datenverkehrs (126) gemäß den Verschlüsselungskonfigurationsparametern (131), um entschlüsselten Datenverkehr (128) bereitzustellen, so dass der entschlüsselte Datenverkehr (128) dem nicht verschlüsselten Datenverkehr (121) entspricht, der durch den ersten Mikrodienst (124) transformiert wird;
wobei die Benutzerebeneneinheit (722) ferner zu Folgendem konfiguriert ist:
Empfangen des ersten verschlüsselten Datenverkehrs (123) von einem Benutzergerät, UE (710), von einem Anwendungsserver (232) oder
von einer anderen Benutzerebeneneinheit;
Transformieren des ersten verschlüsselten Datenverkehrs (123) in den zweiten verschlüsselten Datenverkehr (126) durch Anwenden des zweiten Mikrodienstes (125) auf den ersten verschlüsselten Datenverkehr (123); und
Übertragen des zweiten verschlüsselten Datenverkehrs (126) an das UE (710), den Anwendungsserver (232) oder die andere Benutzerebeneneinheit;
wobei die Benutzerebeneneinheit (722) Folgendes umfasst:
einen Verschlüsselungsprozessor (603), der dazu ausgelegt ist, den ersten verschlüsselten Datenverkehr (123) durch Anwenden des zweiten Mikrodienstes (125) auf den ersten verschlüsselten Datenverkehr (123) in den zweiten verschlüsselten Datenverkehr (126) zu transformieren; und
einen Verschlüsselungskompilierer (604), der dazu ausgelegt ist, den ersten Mikrodienst (124) in den zweiten Mikrodienst (125) umzuwandeln,
wobei der Verschlüsselungskompilierer (604) in den Verschlüsselungsprozessor (603) integriert ist.

2. Benutzerebeneneinheit (722) nach Anspruch 1, wobei die Verschlüsselungskonfigurationsparameter (131) die Benutzerebeneneinheit (722) zu Folgendem konfigurieren:
Transformieren der ersten verschlüsselten Daten (123) in einen verschlüsselten Zwischendatenverkehr durch Anwenden des zweiten Mikrodienstes (125) auf den ersten verschlüsselten Datenverkehr (123); und
Transformieren des verschlüsselten Zwischendatenverkehrs in den zweiten verschlüsselten Datenverkehr (126) oder in einen anderen verschlüsselten Zwischendatenverkehr durch Anwenden des zweiten Mikrodienstes (125) auf den verschlüsselten Zwischendatenverkehr.

3. Benutzerebeneneinheit (722) nach Anspruch 1 oder 2,
wobei die Verschlüsselungskonfigurationsparameter (131) ein Verschlüsselungsschema (132), das Eigenschaften der Verschlüsselung und Entschlüsselung spezifiziert, und einen verschlüsselungsschemaspezifischen Parametersatz (133), der ein spezifischer Parametersatz für das Verschlüsselungsschema (132) ist, umfassen.

4. Benutzerebeneneinheit (722) nach Anspruch 3,
wobei das Verschlüsselungsschema (132) dazu ausgelegt ist, homomorphe Verschlüsselung zu unterstützen.

5. Benutzerebeneneinheit (722) nach Anspruch 3 oder 4,
wobei der verschlüsselungsschemaspezifische Parametersatz (133) mindestens eines der folgenden Elemente oder eine Kombination davon umfasst:
einen Klartextmodul,
einen Polynommodul und
einen Chiffretextmodul.

6. Benutzerebeneneinheit (722) nach einem der vorhergehenden Ansprüche, die dazu ausgelegt ist, als mindestens eine der folgenden Einheiten zu fungieren:
eine Verschlüsselungseinheit (602), die dazu ausgelegt ist, den Datenverkehr (121) zu verschlüsseln, um den ersten verschlüsselten Datenverkehr (123) bereitzustellen;
einen Verschlüsselungskompilierer (604), der dazu ausgelegt ist, den ersten Mikrodienst (124) in den zweiten Mikrodienst (125) umzuwandeln;
einen Verschlüsselungsprozessor (603), der dazu ausgelegt ist, den ersten verschlüsselten Datenverkehr (123) durch Anwenden des zweiten Mikrodienstes (125) auf den ersten verschlüsselten Datenverkehr (123) in den zweiten verschlüsselten Datenverkehr (126) zu transformieren; und
eine Entschlüsselungseinheit (605), die dazu ausgelegt ist, den zweiten verschlüsselten Datenverkehr (126) zu entschlüsseln (127), um den entschlüsselten Datenverkehr (128) bereitzustellen.

## Revendications

1. Entité de plan utilisateur (722) pour un traitement de trafic de données (121) dans un réseau de communication (100), l'entité de plan utilisateur (722) comprenant :
une interface de commande (130) pour recevoir des paramètres de configuration de chiffrement (131) sur le réseau de communication (100), les paramètres de configuration de chiffrement (131) configurant l'entité de plan utilisateur (722) pour :
chiffrer (122) le trafic de données (121) selon les paramètres de configuration de chiffrement (131) pour fournir un premier trafic de données chiffré (123) ;
convertir un premier microservice (124) en un deuxième microservice (125) sur la base des paramètres de configuration de chiffrement (131), le premier microservice (124) comprenant des règles pour mettre en œuvre des calculs sur le trafic de données (121), le deuxième microservice (125) comprenant des règles pour mettre en œuvre des calculs sur le premier trafic de données chiffré (123) ;
transformer le premier trafic de données chiffré (123) en deuxième trafic de données chiffré (126) en appliquant le deuxième microservice (125) au premier trafic de données chiffré (123) ; et
déchiffrer (127) le deuxième trafic de données chiffré (126) selon les paramètres de configuration de chiffrement (131) pour fournir un trafic de données déchiffré (128) de telle sorte que le trafic de données déchiffré (128) correspond au trafic de données (121) non chiffré transformé par le premier microservice (124) ;
l'entité de plan utilisateur (722) étant en outre configurée pour :
recevoir le premier trafic de données chiffré (123) en provenance d'un équipement utilisateur, UE (710), en provenance d'un serveur d'application (232), ou
en provenance d'une autre entité de plan utilisateur ;
transformer le premier trafic de données chiffré (123) en le deuxième trafic de données chiffré (126) en appliquant le deuxième microservice (125) au premier trafic de données chiffré (123) ; et
transmettre le deuxième trafic de données chiffré (126) à l'UE (710), au serveur d'application (232), ou à l'autre entité de plan utilisateur ;
l'entité de plan utilisateur (722) comprenant :
un processeur de chiffrement (603) configuré pour transformer le premier trafic de données chiffré (123) en le deuxième trafic de données chiffré (126) en appliquant le deuxième microservice (125) au premier trafic de données chiffré (123) ; et
un compilateur de chiffrement (604) qui est configuré pour convertir le premier microservice (124) en le deuxième microservice (125),
dans laquelle le compilateur de chiffrement (604) est intégré dans le processeur de chiffrement (603).

2. Entité de plan utilisateur (722) selon la revendication 1, les paramètres de configuration de chiffrement (131) configurant l'entité de plan utilisateur (722) pour :
transformer les premières données chiffrées (123) en un trafic de données chiffré intermédiaire en appliquant le deuxième microservice (125) au premier trafic de données chiffré (123) ; et
transformer le trafic de données chiffré intermédiaires en le deuxième trafic de données chiffré (126) ou en un autre trafic de données chiffré intermédiaire en appliquant le deuxième microservice (125) au trafic de données chiffré intermédiaire.

3. Entité de plan utilisateur (722) selon la revendication 1 ou 2,
dans laquelle les paramètres de configuration de chiffrement (131) comprennent un schéma de chiffrement (132), spécifiant des caractéristiques du chiffrement et du déchiffrement, et un ensemble de paramètres spécifique au schéma de chiffrement (133) qui est un ensemble de paramètres spécifique pour le schéma de chiffrement (132).

4. Entité de plan utilisateur (722) selon la revendication 3,
dans laquelle le schéma de chiffrement (132) est configuré pour prendre en charge le chiffrement homomorphe.

5. Entité de plan utilisateur (722) selon la revendication 3 ou 4,
dans laquelle l'ensemble de paramètres spécifique au schéma de chiffrement (133) comprend au moins un élément ou une combinaison des éléments suivants :
un module de texte en clair,
un module polynomial, et
un module de texte crypté.

6. Entité de plan utilisateur (722) selon l'une quelconque des revendications précédentes, configurée pour agir en tant qu'au moins une des entités suivantes :
une entité de chiffrement (602), configurée pour chiffrer le trafic de données (121) fournissant le premier trafic de données chiffré (123) ;
un compilateur de chiffrement (604), configuré pour convertir le premier microservice (124) en le deuxième microservice (125),
un processeur de chiffrement (603), configuré pour transformer le premier trafic de données chiffré (123) en le deuxième trafic de données chiffré (126) en appliquant le deuxième microservice (125) au premier trafic de données chiffré (123) ; et
une entité de déchiffrement (605), configurée pour déchiffrer (127) le deuxième trafic de données chiffré (126) fournissant le trafic de données déchiffré (128).
